# EUROPEAN PATENT SPECIFICATION

(11) **EP 3 256 769 B1**
(45) Date of publication and mention of the grant of the patent: **20.03.2019**
(21) Application number: 16702157.5
(22) Date of filing: 02.02.2016
(51) Int. Cl.: F16L 57/06, F16L 11/08, F16L 11/12, G01M 3/18

(54) **A SLURRY OPERATION DEVICE WITH A MONITORING SYSTEM FOR DETECTING INTERIOR WEAR, AN OPERATION PLANT COMPRISING THE SAME, AS WELL AS A METHOD OF INSTALLATION THEREOF**
AUFSCHLÄMMUNGSBETRIEBSVORRICHTUNG MIT EINEM ÜBERWACHUNGSSYSTEM ZUR ERKENNUNG DES INTERNEN VERSCHLEISSES, BETRIEBSANLAGE DAMIT SOWIE VERFAHREN ZUR INSTALLATION DAVON
DISPOSITIF D'ACTIONNEMENT À SUSPENSION ÉPAISSE POURVU D'UN SYSTÈME DE SURVEILLANCE POUR DÉTECTER UNE USURE INTÉRIEURE, USINE D'ACTIONNEMENT COMPRENANT CELUI-CI ET PROCÉDÉ D'INSTALLATION DE CELUI-CI

(30) Priority: 10.02.2015 SE 1550150
(43) Date of publication of application: 20.12.2017
(73) Proprietor: METSO SWEDEN AB, 231 22 Trelleborg (SE)
(72) Inventor: RÖNNERDAG, Olof, 934 93 Kusmark (SE); NILSSON, Patrik, 930 47 Byske (SE)
(74) Representative: AWA Sweden AB
(86) International application number: PCT/EP2016/052141
(87) International publication number: WO 2016/128250

(56) References cited:
- DE-A1-102013 101 360
- JP-A- 2007 132 371
- US-A1- 2005 138 990

## Description

### FIELD OF THE INVENTION

The present invention relates to a slurry operation device with a monitoring system for detecting interior wear of said slurry operation device, which slurry operation device transfer or process solid material in a fluid. An operation plant comprising such a slurry operation device, as well as a method of installing a monitoring system for detecting interior wear of a slurry operation device are also disclosed.

### BACKGROUND

In slurry operation plants, such as e.g. mining operations and aggregates industry, solid, abrasive, crushed and/or particulate material is transferred and processed in a fluid, i.e. like a slurry, from e.g. the mining site to crushing and further to different types of treatment plants. When transferred via hoses and/or pipelines, the solid material give rise to a high degree of wear on the inner wall of the hoses and/or pipelines, and in particular if there is a curve or bend in the hose or pipeline, or any intrusion that could cause turbulence and therefore wear the hose or pipeline prematurely in one part of the length.

The hoses and pipelines for such use are provided with an inner lining, normally manufactured from natural rubber compounds.

At present, most hoses and pipelines used are normally completely worn through before the wear is detected. This can cause leakage of material, which is not only a danger to personnel due to the high pressure of the material in the hoses or pipelines, but the spillage may be an environmental hazard, as well as the obvious loss in production.

It is therefore an advantage that the plant operator is pre-warned of such a situation and therefore it is desirable to detect such wear locations and pre-warn the plant operator to prevent wearing the hoses and/or pipelines completely through, and enable having the hoses and/or pipelines exchange before it becomes a critical situation.

Many different systems for monitoring wear within hoses and/or pipelines have been suggested, but not all are applicable in harsh environment such as within mining and/or aggregates operations. Other systems must be put in place during the manufacturing of hoses and/or pipelines, and these systems therefore raise the costs for the installation thereof as all hoses and pipelines within a plant have to be exchanged before being ready and up running with such a monitoring system. Such a system is for example disclosed in US2004/0065377, JP2007-132371, and DE102013101360.

### SUMMARY

An object of the invention is to provide a slurry operation device with a monitoring system for detecting interior wear, which may be installed in existing slurry operation devices within an operation plant.

Another object of the invention is to provide a slurry operation plant with slurry operation devices with monitoring systems for detecting interior wear, which detection/indication is device specific. Thus, each device of a slurry operation plant may be monitored and indicated separately.

According to a first aspect of the invention, these and other objects are achieved, in full or at least in part, by a slurry operation device with a monitoring system for detecting interior wear of said slurry operation device, which slurry operation device transfer or process solid material in a fluid, and which slurry operation device has an enclosing cross-section. According to this first aspect the slurry operation device comprises an interior wear layer having an inner surface, adapted for contact with solid material in a fluid, and an outer surface; a support structure wound, woven or braided about said outer surface; and an exterior cover layer being disposed over said support structure. The monitoring system comprises at least one moisture sensor arranged to detect moisture in said support structure; and communication means coupled to said moisture sensor for providing a signal representative of moisture detection in or at said support structure.

By using the supporting structure for sensing any moisture, any leakage along the longitudinal direction of the slurry operation device, like the length of a hose segment, will give a detection, as the supporting structure is wound, woven or braided around the outer surface of the inner wear layer along the longitudinal direction of the slurry operation device and will lead and guidance fluid from said leakage along the longitudinal direction of the slurry operation device to said at least one sensor, and the communication means will present the moisture detection, giving the plant operator an early warning of the slurry operation device wear.

According to one embodiment, said support structure has a structure which guides or leads fluid within its structure.

According to one embodiment, said support structure comprises at least one cord layer wound about said outer surface. The cord with its warp wires will lead and guide the fluid leakage along the supporting structure to the sensor and will give an indication on the sensor and so forth.

According to another embodiment, the support structure comprises a spiral structure wound about said outer surface or about said at least one cord layer. Such a spiral structure will provide a circumferential cavity around the spiral structure, and fluid leaking into the layer with the spiral structure will enter into this circumferential cavity and travel along the spiral structure and will give indication on the sensor when reaching the area within the supporting structure having a moisture sensor. By using the circumferential cavity around the spiral structure for sensing any moisture, any leakage along the longitudinal direction of the slurry operation device, like the length of a hose segment, will give a detection, as the circumferential cavity is extending along the longitudinal direction of the slurry operation device, and one leakage at one position, will fill the interior of the circumferential cavity giving an indication on the sensor and the communication means will present the moisture detection, giving an early warning to the plant operator of a critical wear of the slurry operation device.

In one embodiment, said support structure comprises at least two cord layers wound about said outer surface, and a spiral structure wound between two of said at least two cord layers.

In one embodiment said support structure comprises at least one cord layer, in or at which said moisture sensor is positioned to measure any moisture entering into the structure of the cord layer or measuring any moisture guided and traveling along the surface of said cord layer.

In another embodiment, said monitoring system further comprises at least one pressure sensor arranged to measure the pressure in said support structure, and communication means coupled to said pressure sensor for providing a signal representative of pressure detection in said support structure. With such an arrangement, the moisture sensor may provide a first indication of wear and leaking, while the pressure sensor measures the pressure within the supporting structure and may provide a second indication of wear and alarm at a predetermined threshold value before the pressure build up within the slurry operation device will give rise to a danger or a critical situation.

According to one embodiment of the invention said communication means providing a signal representative of pressure detection in said supporting structure is the same communication means providing a signal representative of moisture detection within in said supporting structure.

According to one embodiment said at least one moisture sensor and/or said at least one pressure sensor is/are arranged by cutting through said exterior cover layer of said slurry operation device down into said support structure, and providing a sensor cavity within which said at least one moisture sensor and/or said at least one pressure sensor is/are positioned, wherein said sensor cavity is sealed tight from the outside of the slurry operation device.

According to another embodiment said at least one moisture sensor and/or said at least one pressure sensor is/are arranged within said support structure during manufacturing of said slurry operation device, and said sensor(s) is/are wireless sensor(s).

According to one embodiment said at least one moisture sensor and/or said at least one pressure sensor comprise wireless sensors e.g. based on Radio-frequency identification (RFID).

According to one embodiment said communication means and said sensors are coupled via a wireless signal.

According to one embodiment the communication means comprises signaling devices coupled to said sensors, which signaling devices communicates via an optical signal, a sound signal, an electric signal, and/or a wireless signal.

According to one embodiment the communication means comprises at least one manually monitored signaling device comprising colored light-emitting diode (LED).

In even another embodiment said at least one manually monitored signaling device has one two colored LED switch to indicate moisture and optionally pressure within said support structure.

According to a further embodiment said at least one manually monitored signaling device has two separate LEDs switch to indicate moisture and optionally pressure within said support structure.

According to yet another embodiment said communication means comprises an automatic monitoring system with signaling devices, access points for collecting data from all signaling devices within its range, and a monitor/alarm server for collecting data from each access point.

According to one embodiment said communication means communicates wireless, via e.g. Wi-Fi or General Packet Radio System (GPRs).

According to one embodiment said monitor/alarm servers may comprise servers with a cloud based system, and all data may be presented in a web browser, and PC, Mac, iPad, and smart phones like iPhone, Android and Windows Phone may be used for instant notification upon moisture detection and optionally pressure detection.

With such a system the plant operator will always receive the current status of the moisture sensors and optionally pressure sensors, and this will give the plant operator the opportunity to plan the maintenance of the slurry operation devices.

In one embodiment a camera surveillance of the plants/process may be provided as a complement to the claimed monitoring system.

Said moisture sensor may be of any type of moisture sensor as long as it is a reliable and may withstand the harsh environment of a slurry operation plant.

According to one embodiment said moisture sensor may be a resistive moisture sensor, and in one particular embodiment said resistive moisture sensor is positioned on a signaling device positioned as a closing wall of said sensor cavity.

Said pressure sensors may be of any type of pressure sensor as long as it is reliable and may withstand the harsh environment of a slurry operation plant.

According to one embodiment said pressure sensor may be positioned on a signaling devices positioned as a closing wall of said sensor cavity.

According to a second aspect of the invention, these and other objects are also achieved, in full or at least in part, by a slurry operation plant comprising at least one slurry operation device according to anyone of the preceding claims. According to this second aspect said at least one moisture sensor and optionally at least one pressure sensor is/are device specific and provides separate detections/alarms for each separate slurry operation device. By having at least one sensor in each separate slurry operation device, e.g. in each separate hose segment, the monitoring system will detect/alarm each specific device or segment device being worn, and that specific device, or segment device, may be exchanged instead of changing the complete system, such as a hose system or pipeline system.

According to a third aspect of the invention, these and other objects are also achieved, in full or at least in part, by a method of installing a monitoring system for detecting interior wear of a slurry operation device, which slurry operation device transfer or process solid material in a fluid, and which slurry operation device has an enclosing cross-section; and comprises an interior wear layer having an inner surface, adapted for contact with solid material in a fluid, and an outer surface; a support structure wound, woven or braided about said outer surface; and an exterior cover layer being disposed over said support structure. According to this third aspect the method comprises arranging at least one moisture sensor to detect moisture entering in said support structure; and coupling communication means to said at least one moisture sensor for providing a signal representative of moisture detection in said support structure.

As disclosed above, it is an advantage to be able to install the monitoring system in existing slurry operation plants, as long as the slurry operation device is equipped with an inner support structure embedded between an interior wear layer, and an exterior cover layer being disposed over said support structure. Further, as stated above, by using the support structure for sensing any moisture, any leakage along the longitudinal direction of the slurry operation device, like the length of a hose segment, will give a detection, as the supporting structure is wound, woven or braided around the outer surface of an inner layer along the longitudinal direction of the slurry operation device, and leakage at one position will be led and guided along supporting structure in the longitudinal direction of the slurry operation device, and reach said at least one moisture sensor and give the plant operator an early warning of critical wear of the slurry operation device.

In one embodiment, said method further comprises arranging at least one pressure sensor to measure the pressure in said support structure; and coupling communication means to said at least one pressure sensor for providing a signal representative of pressure detection in or at said support structure.

In another embodiment, said at least one moisture sensor and/or said at least one pressure sensor is/are arranged by cutting through said exterior cover layer of said slurry operation device down t into said support structure; providing at least one sensor cavity; arranging said at least one moisture sensor and/or said at least one pressure sensor within said at least one sensor cavity; and sealing said at least one sensor cavity tight from the outside of the slurry operation device.

In another embodiment, said at least one moisture sensor and/or said at least one pressure sensor is/are arranged in said support structure during manufacturing of said slurry operation device, said sensor(s) is/are wireless sensor(s).

Other objectives, features and advantages of the present invention will appear from the following detailed disclosure, from the attached claims, as well as from the drawings. It is noted that the invention relates to all possible combinations of features.

Although the invention will be described with respect to its application in mining and aggregate industries and degrading of hoses, in particular hoses carrying substances of an aggressive and abrasive nature, it will be appreciated that it is not limited to this particular application and is equally applicable to other devices in which solid material are processed or transferred in a fluid.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

As used herein, the term "comprising" and variations of that term are not intended to exclude other additives, components, integers or steps.

### DEFINITIONS

The term "enclosing cross-section", in connection with the slurry operation device, means any slurry operation device having a wall surface forming a closed loop or circular wall segment around a process stream or a process chamber.

The term "support structure" means a layer within the wall structure of the slurry operation device providing support to the wall structure, reinforcing the wall structure and providing pressure leveling around and along the slurry operation device. A "support structure" may comprise at least one from the group comprising cord layers, spiral structure elements, steel spirals, and reinforcing web material wound, woven or braided about the enclosing wall surface.

The term "cord layer" means a web material comprising warp and/or weft threads, and may be provided in any suitable material. Cord layers are wound around the slurry operation device to provide pressure leveling around and along the slurry operation device.

### BRIEF DESCRIPTION OF THE DRAWINGS

The invention will now be described in more detail with reference to the appended schematic drawings, which show an example of a presently preferred embodiment of the invention.
Fig. 1 is a schematic view of the build-up of a typical slurry operation hose showing different layers thereof.
Fig. 2a is a schematic cross-sectional view of the slurry operation hose of Fig. 1 in section A-A.
Fig.2b is a partial magnification of the schematic cross-sectional view of the slurry operation hose of Fig. 2a.
Fig. 3 is a partial magnification of the schematic cross-sectional view of the slurry operation hose of Fig. 2a with a monitoring system according to one embodiment of the invention.
Fig. 4 is a partial magnification of the schematic cross-sectional view of the slurry operation hose of Fig. 2a with a monitoring system according to another embodiment of the invention.
Figs. 5a and 5b are partial magnifications of the schematic cross-sectional view of the slurry operation hose of Fig. 2a with monitoring systems according to further embodiments of the invention.
Figs. 6a and 6b are partial magnifications of another schematic cross-sectional view of a slurry operation device with monitoring systems according to further embodiments of the invention.
Figs. 7a and 7b are partial magnifications of another schematic cross-sectional view of a slurry operation device with monitoring systems according to further embodiments of the invention.

### DETAILED DESCRIPTION

The present invention will now be described more fully hereinafter with reference to the accompanying drawings, in which currently preferred embodiments of the invention are shown. The present invention may, however, be embodied in many different forms and should not be construed as limited to the embodiments set forth herein; rather, these embodiments are provided for thoroughness and completeness, and to fully convey the scope of the invention to the skilled addressee. Like reference characters refer to like elements throughout.

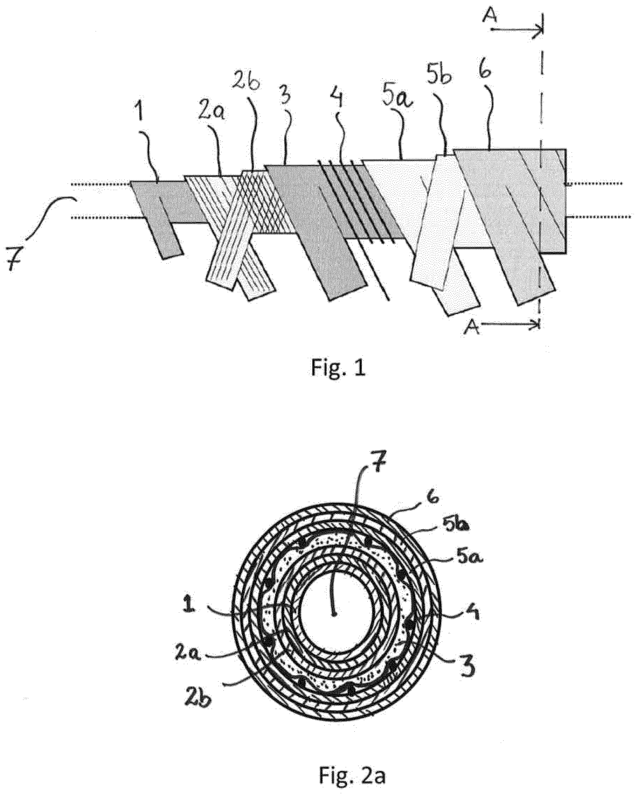

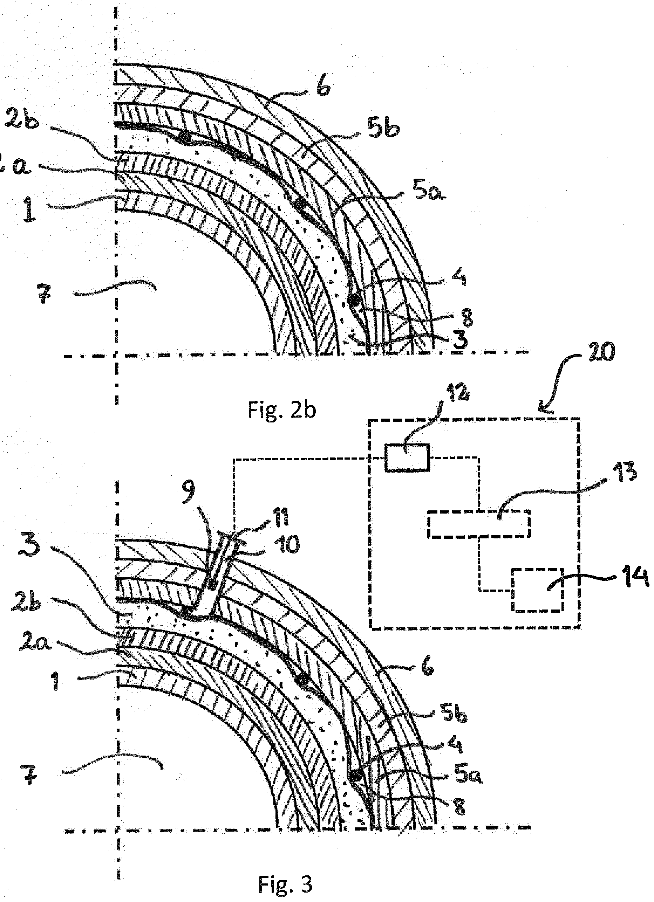

Fig. 1 and Fig. 2a show a schematic view and a schematic cross-sectional view of the build-up of a typical slurry operation hose showing the different layers thereof. The layer marked with reference number 1 is an interior wear layer having an inner surface, which is adapted for contact with solid abrasive material, like crushed and/or particulate material from mining and aggregate industry, such like ore and similar material, in a fluid, and which forms a hose transfer line 7. The layers marked with reference number 2a and 2b are cord layers, which cord layers are wound about the inner layer to provide pressure leveling around and along the hose. The layer marked with reference number 3 is a rubber layer for embedding a spiral structure marked with reference number 4. The layers marked with reference number 5a and 5b are additional cord layers, which cord layers are wound about the inner layers to provide additional pressure leveling around and along the hose. And finally, the layer marked with reference number 6 is an exterior cover layer being disposed over the outermost cord layer. As shown in Fig. 2a and enlarged in Fig. 2b, the rubber layer 3 embeds the spiral structure 4 and a circumferential cavity 8 is provided along the spiral structure 4.

In the shown embodiment the spiral structure 4 is embedded between the rubber layer 3 and the cord layer 5a. However, in another embodiment, said spiral structure 4 may be embedded between the interior wear layer 1 and an exterior cover layer 6, or between two adjacent cord layers.

When the hose is worn from inside and the wear reaches the spiral structure 4, fluid from within the hose transfer line 7 will enter into the circumferential cavity 8 around the spiral structure 4 and will be lead to travel along the wire 4 and spread along the longitudinal direction of the hose segment. Having a moisture sensor arranged to measure moisture within this circumferential cavity 8 will indicate for each hose segment the presence of moisture and fluid therein, and thereby a critical wear of that particular hose segment.

In Fig. 3, a moisture sensor 9 is arranged in a sensor cavity 10, which sensor cavity 10 has been provided by cutting through the exterior cover layer 6, and the cord layers 5a and 5b down to the spiral structure 4 and the circumferential cavity 8 around the spiral structure 4. The moisture sensor 9 is positioned within the sensor cavity 10 or at a closing wall 11. The sensor cavity 10 is sealed tight from the outside of the hose. As further schematically illustrated in Fig. 3, the moisture sensor 9 is arranged in communication with communication means 20, which may comprise an automatic monitoring system including signaling devices 12, at least one access point 13 for collecting data from all signaling devices 12 within its range, and a monitor/alarm server 14 for collecting data from each access point 13. Such communication means may communicate wireless, e.g. via Wi-Fi or GPRs, and said monitor/alarm servers 14 may comprise servers with a cloud based system, and all data may be presented in a web browser. PC, Mac, iPad, and smart phones like iPhone, Android and Windows Phone may be used for instant notification upon moisture detection.

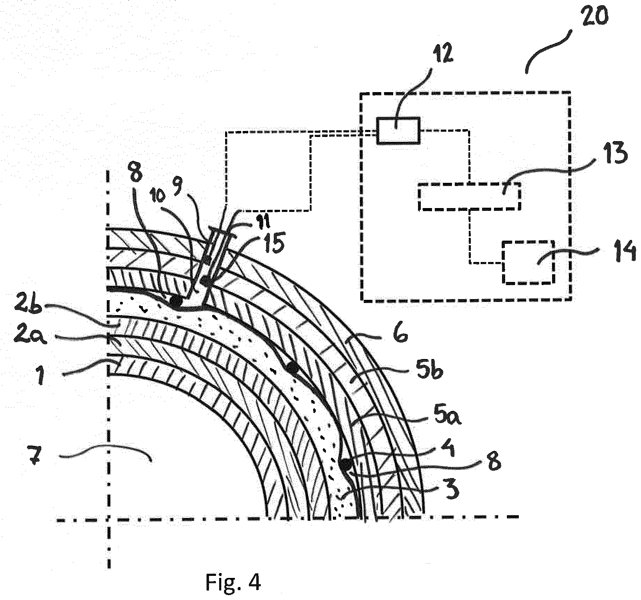

In Fig. 4, a pressure sensor 15 is also arranged within the sensor cavity 10. Again the sensor, this time the pressure sensor 15, may be positioned within the sensor cavity 10 or at the closing wall 11. The pressure sensor 15 is arranged in communication with communication means 20, which as stated above may comprise an automatic monitoring system.

In one embodiment the communication means 20 comprises manually monitored signaling devices 12 having one two colored LED switch to indicate moisture and optionally pressure within said circumferential cavity around said spiral structure 4, or said manually monitored signaling devices 12 may comprise two separate LEDs switch to indicate moisture and optionally pressure within said circumferential cavity around said spiral structure 4.

Such manually monitored signaling devices may also be combined with automatic monitoring systems as disclosed above.

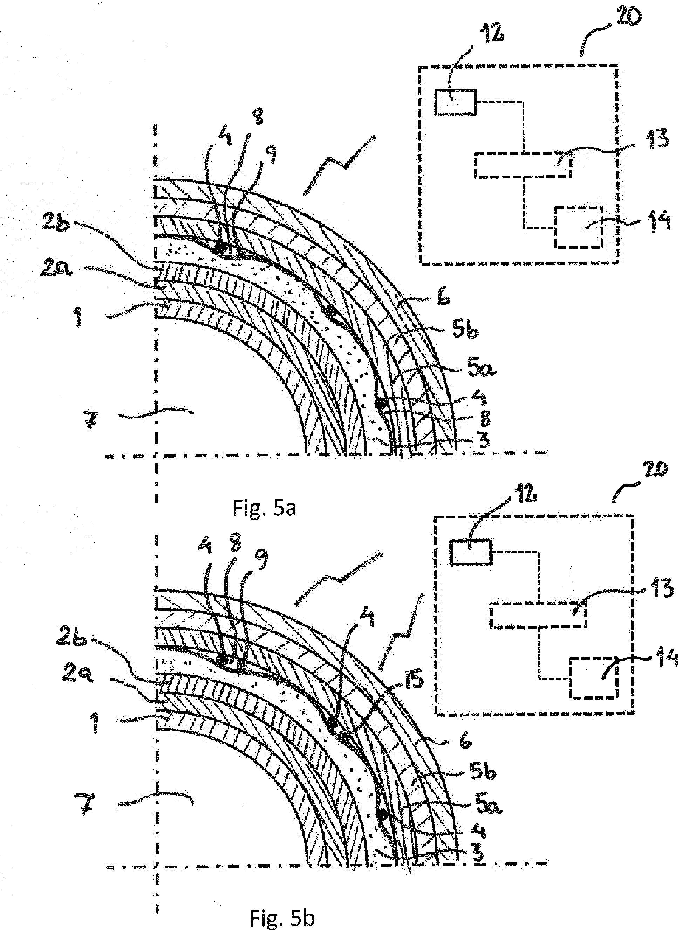

Fig. 5a shows a partial magnification of the view of the slurry operation hose of Fig. 2a, with a monitoring system which has been installed during manufacturing of the slurry operation hose. A moisture sensor has been positioned in between the different layers building up the slurry operation hose, and in the shown embodiment the moisture sensor has been arranged to align with the layer comprising the spiral structure 4, to be in communication with the circumferential cavity 8 provided along the spiral structure 4.

Also Fig. 5b shows a partial magnification of the view of the slurry operation hose of Fig. 2a, with a monitoring system which has been installed during manufacturing of the slurry operation hose. A wireless moisture sensor and a wireless pressure sensor have been positioned in between the different layers building up the slurry operation hose, and in the shown embodiment the moisture sensor and the pressure sensor have been arranged to align with the layer comprising the spiral structure 4 to be in communication with the circumferential cavity 8 provided along the spiral structure 4.

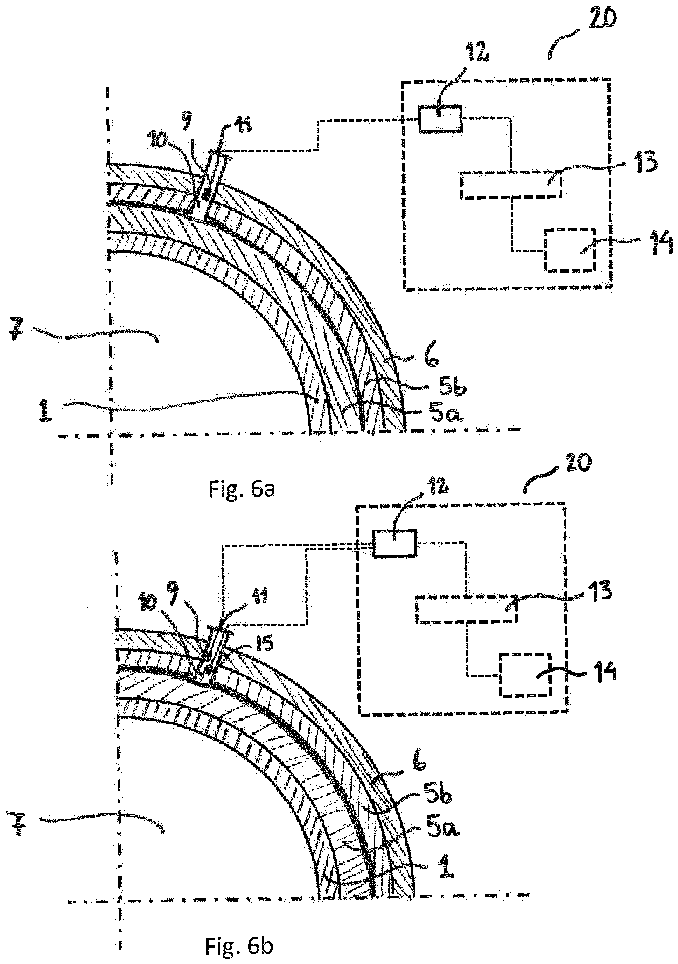

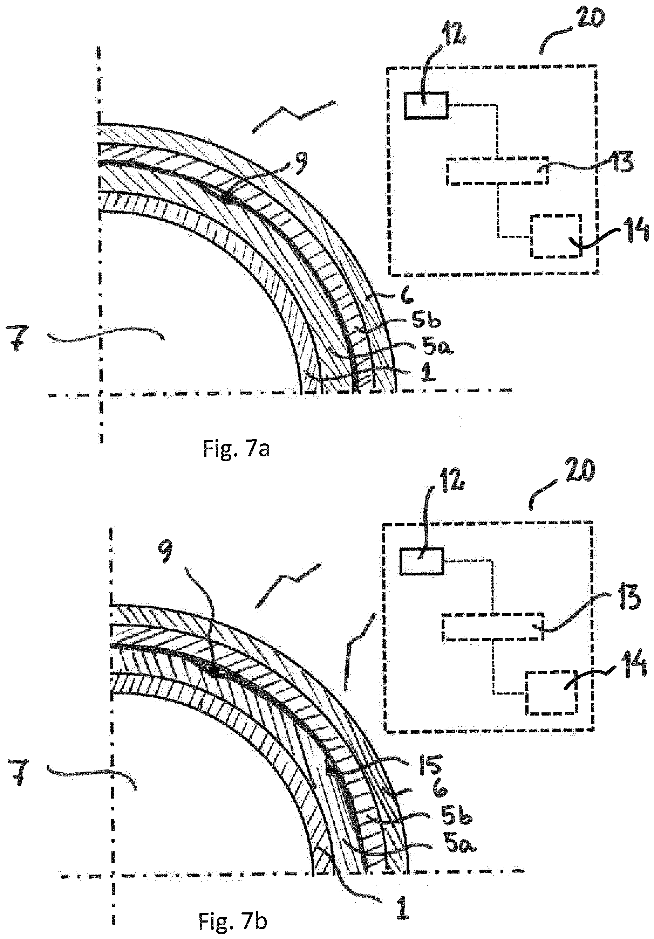

Figs. 6a, 6b, 7a and 7b show a partial magnification of another slurry operation device showing the different wall layers thereof. The layer marked with reference number 1 is an interior wear layer having an inner surface, which is adapted for contact with solid material in a fluid, and an outer surface. The layers marked with reference number 2a and 2b are two cord layers, which cord layers are arranged to circumvent the outer surface of the first layer to provide pressure leveling around and along the slurry operation device. Thus, in this embodiment the support structure comprises the two cord layers 2a, and 2b. And finally, the layer marked with reference number 6 is an exterior cover layer being disposed over the outermost cord layer 2b.

In the embodiment shown in Fig. 6a a monitoring system has been arranged to detect moisture in said support structure, i.e. the cord layers 2a and 2b. The monitoring system has been arranged by cutting through the exterior cover layer 6, and the first cord layer 2b providing a sensor cavity 10. The moisture sensor 9 is positioned within the sensor cavity 10 or at the closing wall 11. In the embodiment in Fig. 6b a pressure sensor 15 is also arranged within the sensor cavity 10 or at a closing wall 11. The sensor cavity 10 is sealed tight from the outside of the hose.

In the embodiment shown in Fig. 7a, a monitoring system has been arranged during manufacturing of the slurry operation device. A wireless moisture sensor has been positioned in between the two cord layers 2a and 2b to be aligned and detect any moisture being guided along or within the support structure comprising the cord layers 2a and 2b. In the embodiment in Fig. 7b a wireless pressure sensor 15 has also been positioned in between the two cord layers 2a and 2b to be aligned and detect any moisture being guided along or within the support structure comprising the cord layers 2a and 2b.

As further schematically illustrated in Figs. 5a, 5b, 6a, 6b, 7a, and 7b, the moisture sensors 9 are arranged in communication with communication means 20, which also may comprise an automatic monitoring system as disclosed above. When having such slurry operations devices arranged in a slurry operation plant, each individual slurry operation device has at least one separate moisture sensor and optionally at least one separate pressure sensor, any detection of moisture and/or a pressure detection above a threshold value will set out a warning which is device specific, and the slurry plant operator will be able to identify which device needs to be replaced.

Hoses or pipelines are commonly mounted in segments, and each segment has its own at least one moisture sensor and optionally at least one pressure sensor, and when detecting an alarm, the plant operator will know which segment of the hose or pipeline to replace.

When detecting moisture entering into the supporting structure of the slurry operation device, this may be seen as an early warning of wear, and when detecting a pressure above a predetermined threshold value this is a another warning that a slurry operation device soon may break and/or burst and that a process stop and replacement of indicated slurry operation device is recommended. By monitoring the early moisture detection, and timing thereof, the plant operator have the possibility to make reasonable and cost effective process stop and maintenance in the slurry operation plant.

Even further, having an automatic monitoring system with signaling devices, access points for collecting data from all signaling devices within its range, and a monitor/alarm server for collecting data from each access point, and using servers with a cloud based system, will enable all data to be presented in a web browser. With such a system, a slurry plant operator may handling multiple slurry operation plants, and may use PC, Mac, iPad, and smart phones like iPhone, Android and Windows Phone for instant notification upon moisture detection and optionally pressure detection.

The skilled person realises that a number of modifications of the embodiments described herein are possible without departing from the scope of the invention, which is defined in the appended claims.

## Claims

1. A slurry operation device with a monitoring system for detecting interior wear of said slurry operation device, which slurry operation device tansfers or processes solid material in a fluid, and which slurry operation device has an enclosing cross-section, wherein said slurry operation device comprises
an interior wear layer (1) having an inner surface, adapted for contact with solid material in a fluid, and an outer surface;
a support structure (2a, 2b, 3, 4, 5a, 5b; 5a, 4, 5b; 5a, 5b) wound, woven or braided about said outer surface; and
an exterior cover layer (6) being disposed over said support structure; and wherein said monitoring system comprises
at least one moisture sensor (9) and communication means (20) coupled to said moisture sensor for providing a signal representative of moisture detection in said support structure,
**characterised in that** said moisture sensor is arranged to detect moisture in said support structure.

2. A slurry operation device according to claim 1, wherein said support structure (2a, 2b, 3, 4, 5a, 5b; 5a, 4, 5b; 5a, 5b) has a structure which guides or leads fluid within its structure.

3. A slurry operation device according to claim 1 or claim 2, wherein said support structure (2a, 2b, 3, 4, 5a, 5b; 5a, 4, 5b; 5a, 5b) comprises at least one cord layer (2a, 2b, 5a, 5b; 5a, 5b) wound about said outer surface.

4. A slurry operation device according to anyone of the preceding claims, wherein said support structure comprises a spiral structure (4) wound about said outer surface or about said at least one cord layer (2a, 2b; 5a).

5. A slurry operation device according to anyone of the preceding claims, wherein said support structure (2a, 2b, 3, 4, 5a, 5b; 5a, 4, 5b; 5a, 5b) comprises at least two cord layers (2a, 2b, 5a, 5b; 5a, 5b) wound about said outer surface, and a spiral structure (4) wound between two of said at least two cord layers (2b, 5a; 5a, 5b).

6. A slurry operation device according anyone of the preceding claims, wherein said monitoring system further comprises at least one pressure sensor (15) arranged to measure the pressure in said support structure (2a, 2b, 3, 4, 5a, 5b; 5a, 4, 5b; 5a, 5b), and communication means (20) coupled to said pressure sensor for providing a signal representative of pressure detection in said support structure.

7. A slurry operation device according to claim 6, wherein said communication means (20) for providing a signal representative of pressure detection in said support structure is the same communication means as the communication means providing a signal representative of moisture detection in said support structure (2a, 2b, 3, 4, 5a, 5b; 5a, 4, 5b; 5a, 5b).

8. A slurry operation device according to anyone of the preceding claims, wherein said at least one moisture sensor (9) is arranged by cutting through said exterior cover layer (6) of said slurry operation device down into said support structure (2a, 2b, 3, 4, 5a, 5b; 5a, 4, 5b; 5a, 5b), and providing a sensor cavity (10) within which said at least one moisture sensor is positioned, wherein said sensor cavity is sealed tight from the outside of the slurry operation device.

9. A slurry operation device according to anyone of claims 6-8, wherein said at least one pressure sensor (15) is arranged by cutting through said exterior cover layer (6) of said slurry operation device down into said support structure (2a, 2b, 3, 4, 5a, 5b; 5a, 4, 5b; 5a, 5b), and providing a sensor cavity (10) within which said at least one pressure sensor is positioned, wherein said sensor cavity is sealed tight from the outside of the slurry operation device.

10. A slurry operation device according to anyone of the preceding claims, wherein said at least one moisture sensor (9) is arranged within said support structure (2a, 2b, 3, 4, 5a, 5b; 5a, 4, 5b; 5a, 5b) during manufacturing of said slurry operation device, and said at least one moisture sensor is a wireless sensor.

11. A slurry operation device according to anyone of the claims 6-10, wherein said at least one pressure sensor (15) is arranged within said support structure (2a, 2b, 3, 4, 5a, 5b; 5a, 4, 5b; 5a, 5b) during manufacturing of said slurry operation device, and said at least one pressure sensor is a wireless sensor.

12. A slurry operation plant comprising at least one slurry operation device according to anyone of the preceding claims, **characterised in that** said at least one moisture sensor (9) and optionally at least one pressure sensor (15) is/are device specific and provides separate detections/alarms for each separate slurry operation device.

13. A method of installing a monitoring system for detecting interior wear of a slurry operation device, which slurry operation device transfer or process solid material in a fluid, and which slurry operation device has an enclosing cross-section; and comprises an interior wear layer (1) having an inner surface, adapted for contact with solid material in a fluid, and an outer surface; a support structure (2a, 2b, 3, 4, 5a, 5b; 5a, 4, 5b; 5a, 5b) wound, woven or braided about said outer surface; and an exterior cover layer (6) being disposed over said support structure, **characterised by**
arranging at least one moisture sensor (9) to detect moisture in said support structure; and
coupling communication means (20) to said at least one moisture sensor for providing a signal representative of moisture detection in said support structure.

14. A method according to claim 13, further comprising
arranging at least one pressure sensor (15) to measure the pressure in said support structure (2a, 2b, 3, 4, 5a, 5b; 5a, 4, 5b; 5a, 5b); and
coupling communication means (20) to said at least one pressure sensor for providing a signal representative of pressure detection in said support structure.

15. A method according to claim 13 or claim 14, wherein said at least one moisture sensor (9) is arranged by
cutting through said exterior cover layer (6) of said slurry operation device down into said support structure (2a, 2b, 3, 4, 5a, 5b; 5a, 4, 5b; 5a, 5b);
providing at least one sensor cavity (10);
arranging said at least one moisture sensor within said at least one sensor cavity; and
sealing said at least one sensor cavity tight from the outside of the slurry operation device.

16. A method according to claim 14 or claim 15, wherein said at least one pressure sensor (15) is arranged by
cutting through said exterior cover layer (6) of said slurry operation device down into said support structure (2a, 2b, 3, 4, 5a, 5b; 5a, 4, 5b; 5a, 5b);
providing at least one sensor cavity (10);
arranging said at least one pressure sensor (15) within said at least one sensor cavity; and
sealing said at least one sensor cavity tight from the outside of the slurry operation device.

17. A method according to anyone of claims 13-16, wherein said at least one moisture sensor (9) is arranged in said support structure (2a, 2b, 3, 4, 5a, 5b; 5a, 4, 5b; 5a, 5b) during manufacturing of said slurry operation device, and said at least one moisture sensor is a wireless sensor.

18. A method according to anyone of claims 14-17, wherein said at least one pressure sensor (15) is arranged in said support structure (2a, 2b, 3, 4, 5a, 5b; 5a, 4, 5b; 5a, 5b) during manufacturing of said slurry operation device, and said at least one pressure sensor is a wireless sensor.

## Patentansprüche

1. Schlammbetriebsvorrichtung mit einem Überwachungssystem zum Detektieren eines innerem Verschleißes der Schlammbetriebsvorrichtung, wobei die Schlammbetriebsvorrichtung festes Material in einem Fluid transferiert oder verarbeitet und wobei die Schlammbetriebsvorrichtung einen umschließenden Querschnitt aufweist, wobei die Schlammbetriebsvorrichtung Folgendes umfasst
eine innere Verschleißschicht (1), die eine Innenfläche, die für einen Kontakt mit festem Material in einem Fluid angepasst ist, und eine Außenfläche aufweist;
eine Stützstruktur (2a, 2b, 3, 4, 5a, 5b; 5a, 4, 5b; 5a, 5b), die um die Außenfläche gewickelt, gewebt oder geflochten ist; und
eine äußere Abdeckschicht (6), die über der Stützstruktur platziert ist;
und wobei das Überwachungssystem Folgendes umfasst
mindestens einen Feuchtigkeitssensor (9) und
ein Kommunikationsmittel (20), das zum Bereitstellen eines Signals, das für eine Feuchtigkeitsdetektion in der Stützstruktur repräsentativ ist, an den Feuchtigkeitssensor gekoppelt ist,
**dadurch gekennzeichnet, dass** der Feuchtigkeitssensor angeordnet ist, Feuchtigkeit in der Stützstruktur zu detektieren.

2. Schlammbetriebsvorrichtung nach Anspruch 1, wobei die Stützstruktur (2a, 2b, 3, 4, 5a, 5b; 5a, 4, 5b; 5a, 5b) eine Struktur aufweist, die ein Fluid in ihrer Struktur führt oder leitet.

3. Schlammbetriebsvorrichtung nach Anspruch 1 oder Anspruch 2, wobei die Stützstruktur (2a, 2b, 3, 4, 5a, 5b; 5a, 4, 5b; 5a, 5b) mindestens eine Cordschicht (2a, 2b, 5a, 5b; 5a, 5b), die um die Außenfläche gewickelt ist, umfasst.

4. Schlammbetriebsvorrichtung nach einem der vorhergehenden Ansprüche, wobei die Stützstruktur eine Spiralstruktur (4), die um die Außenfläche oder um die mindestens eine Cordschicht (2a, 2b; 5a) gewickelt ist, umfasst.

5. Schlammbetriebsvorrichtung nach einem der vorhergehenden Ansprüche, wobei die Stützstruktur (2a, 2b, 3, 4, 5a, 5b; 5a, 4, 5b; 5a, 5b) mindestens zwei Cordschichten (2a, 2b, 5a, 5b; 5a, 5b), die um die Außenfläche gewickelt sind, und eine Spiralstruktur (4), die zwischen den mindestens zwei Cordschichten (2b, 5a; 5a, 5b) gewickelt ist, umfasst.

6. Schlammbetriebsvorrichtung nach einem der vorhergehenden Ansprüche, wobei das Überwachungssystem ferner mindestens einen Drucksensor (15), der angeordnet ist, den Druck in der Stützstruktur (2a, 2b, 3, 4, 5a, 5b; 5a, 4, 5b; 5a, 5b) zu messen, und ein Kommunikationsmittel (20), das zum Bereitstellen eines Signals, das für eine Druckdetektion in der Stützstruktur repräsentativ ist, an den Drucksensor gekoppelt ist, umfasst.

7. Schlammbetriebsvorrichtung nach Anspruch 6, wobei das Kommunikationsmittel (20) zum Bereitstellen eines Signals, das für eine Druckdetektion in der Stützstruktur repräsentativ ist, dasselbe Kommunikationsmittel ist wie das Kommunikationsmittel, das ein Signal bereitstellt, das für eine Feuchtigkeitsdetektion in der Stützstruktur (2a, 2b, 3, 4, 5a, 5b; 5a, 4, 5b; 5a, 5b) bereitgestellt ist.

8. Schlammbetriebsvorrichtung nach einem der vorhergehenden Ansprüche, wobei der mindestens eine Feuchtigkeitssensor (9) durch Schneiden durch die äußere Abdeckschicht (6) der Schlammbetriebsvorrichtung hinunter in die Stützstruktur (2a, 2b, 3, 4, 5a, 5b; 5a, 4, 5b; 5a, 5b) und Bereitstellen eines Sensorhohlraums (10), in dem der mindestens eine Feuchtigkeitssensor positioniert ist, angeordnet ist, wobei der Sensorhohlraum gegen die Außenseite der Schlammbetriebsvorrichtung dicht versiegelt ist.

9. Schlammbetriebsvorrichtung nach einem der Ansprüche 6 - 8, wobei der mindestens eine Drucksensor (15) durch Schneiden durch die äußere Abdeckschicht (6) der Schlammbetriebsvorrichtung hinunter in die Stützstruktur (2a, 2b, 3, 4, 5a, 5b; 5a, 4, 5b; 5a, 5b) und Bereitstellen eines Sensorhohlraums (10), in dem der mindestens eine Drucksensor positioniert ist, angeordnet ist, wobei der Sensorhohlraum gegen die Außenseite der Schlammbetriebsvorrichtung dicht versiegelt ist.

10. Schlammbetriebsvorrichtung nach einem der vorhergehenden Ansprüche, wobei der mindestens eine Feuchtigkeitssensor (9) während der Herstellung der Schlammbetriebsvorrichtung in der Stützstruktur (2a, 2b, 3, 4, 5a, 5b; 5a, 4, 5b; 5a, 5b) angeordnet wird und der mindestens eine Feuchtigkeitssensor ein drahtloser Sensor ist.

11. Schlammbetriebsvorrichtung nach einem der Ansprüche 6 - 10, wobei der mindestens eine Drucksensor (15) während der Herstellung der Schlammbetriebsvorrichtung in der Stützstruktur (2a, 2b, 3, 4, 5a, 5b; 5a, 4, 5b; 5a, 5b) angeordnet wird und der mindestens eine Drucksensor ein drahtloser Sensor ist.

12. Schlammbetriebsanlage, die mindestens eine Schlammbetriebsvorrichtung nach einem der vorhergehenden Ansprüche umfasst, **dadurch gekennzeichnet, dass** der mindestens eine Feuchtigkeitssensor (9) und wahlweise der mindestens eine Drucksensor (15) vorrichtungsspezifisch ist/sind und für jede separate Schlammbetriebsvorrichtung separate Detektionen/Alarme bereitstellt.

13. Verfahren zum Installieren eines Überwachungssystems zum Detektieren eines inneren Verschleißes einer Schlammbetriebsvorrichtung, wobei die Schlammbetriebsvorrichtung festes Material in einem Fluid transferieren oder verarbeiten und wobei die Schlammbetriebsvorrichtung einen umschließenden Querschnitt aufweist und eine innere Verschleißschicht (1), die eine Innenfläche aufweist, die für einen Kontakt mit festem Material in einem Fluid angepasst ist, und eine Außenfläche; eine Stützstruktur (2a, 2b, 3, 4, 5a, 5b; 5a, 4, 5b; 5a, 5b), die um die Außenfläche gewickelt, gewebt oder geflochten ist; und eine äußere Abdeckschicht (6) die über der Stützstruktur platziert ist, umfasst, **gekennzeichnet durch**
Anordnen von mindestens einem Feuchtigkeitssensor (9), um Feuchtigkeit in der Stützstruktur zu detektieren; und
Koppeln eines Kommunikationsmittels (20) an den mindestens einen Feuchtigkeitssensor zum Bereitstellen eines Signals, das für eine Feuchtigkeitsdetektion in der Stützstruktur repräsentativ ist.

14. Verfahren nach Anspruch 13, das ferner Folgendes umfasst
Anordnen von mindestens einem Drucksensor (15), um den Druck in der Stützstruktur (2a, 2b, 3, 4, 5a, 5b; 5a, 4, 5b; 5a, 5b) zu messen; und
Koppeln eines Kommunikationsmittels (20) an den mindestens einen Drucksensor zum Bereitstellen eines Signals, das für eine Druckdetektion in der Stützstruktur repräsentativ ist.

15. Verfahren nach Anspruch 13 oder Anspruch 14, wobei der mindestens eine Feuchtigkeitssensor (9) durch Folgendes angeordnet ist
Schneiden durch die äußere Abdeckschicht (6) der Schlammbetriebsvorrichtung hinunter in die Stützstruktur (2a, 2b, 3, 4, 5a, 5b; 5a, 4, 5b; 5a, 5b);
Bereitstellen von mindestens einem Sensorhohlraum (10);
Anordnen des mindestens einen Feuchtigkeitssensors im mindestens einen Sensorhohlraum und
dichtes Versiegeln des mindestens einen Sensorhohlraums gegen die Außenseite der Schlammbetriebsvorrichtung.

16. Verfahren nach Anspruch 14 oder Anspruch 15, wobei der mindestens eine Drucksensor (15) durch Folgendes angeordnet ist
Schneiden durch die äußere Abdeckschicht (6) der Schlammbetriebsvorrichtung hinunter in die Stützstruktur (2a, 2b, 3, 4, 5a, 5b; 5a, 4, 5b; 5a, 5b);
Bereitstellen von mindestens einem Sensorhohlraum (10);
Anordnen des mindestens einen Drucksensors (15) im mindestens einen Sensorhohlraum und
dichtes Versiegeln des mindestens einen Sensorhohlraums gegen die Außenseite der Schlammbetriebsvorrichtung.

17. Verfahren nach einem der Ansprüche 13 - 16, wobei der mindestens eine Feuchtigkeitssensor (9) während der Herstellung der Schlammbetriebsvorrichtung in der Stützstruktur (2a, 2b, 3, 4, 5a, 5b; 5a, 4, 5b; 5a, 5b) angeordnet wird und der mindestens eine Feuchtigkeitssensor ein drahtloser Sensor ist.

18. Verfahren nach einem der Ansprüche 14 - 17, wobei der mindestens eine Drucksensor (15) während der Herstellung der Schlammbetriebsvorrichtung in der Stützstruktur (2a, 2b, 3, 4, 5a, 5b; 5a, 4, 5b; 5a, 5b) angeordnet wird und der mindestens eine Drucksensor ein drahtloser Sensor ist.

## Revendications

1. Actionnement à suspension épaisse avec un système de surveillance pour détecter l'usure intérieure dudit actionnement à suspension épaisse, lequel actionnement à suspension épaisse transfère ou traite une matière solide dans un fluide est lequel actionnement à suspension épaisse a une section transversale englobante, dans lequel ledit actionnement à suspension épaisse comprend
une couche d'usure intérieure (1) ayant une surface intérieure, adaptée pour le contact avec la matière solide dans un fluide et une surface extérieure ;
une structure de soutien (2a, 2b, 3, 4, 5a, 5b ; 5a, 4, 5b ; 5a, 5b) enroulée, tissée ou tressée autour de ladite surface extérieure ; et
une couche de couverture extérieure (6) étant disposée sur ladite structure de support ; et dans lequel
ledit système de surveillance comprend au moins un capteur d'humidité (9) et
un moyen de communication (20) couplée au dit capteur d'humidité pour fournir un signal représentatif d'une détection d'humidité dans ladite structure de soutien,
**caractérise en ce que** ledit capteur d'humidité est agencé pour détecter l'humidité dans ladite structure de soutien.

2. Actionnement à suspension épaisse selon la revendication 1, dans lequel ladite structure de soutien (2a, 2b, 3, 4, 5a, 5b ; 5a, 4, 5b ; 5a, 5b) possède une structure qui guide ou mène le fluide à l'intérieur de sa structure.

3. Actionnement à suspension épaisse selon la revendication 1 ou 2, dans lequel ladite structure de soutien (2a, 2b, 3, 4, 5b ; 5a, 4, 5b ; 5a, 5b) comprend au moins une couche de corde (2a, 2b, 5a, 5b ; 5a, 5b) enroulée autour de ladite surface extérieure.

4. Actionnement à suspension épaisse selon une quelconque des revendications précédentes, dans lequel ladite structure de soutien comprend une structure en spirale (4) enroulée autour de ladite surface extérieure ou autour de ladite au moins une couche de corde (2a, 2b ; 5a).

5. Actionnement à suspension épaisse selon une quelconque des revendications précédentes, dans lequel ladite structure de soutien (2a, 2b, 3, 4, 5b ; 5a, 4, 5b ; 5a, 5b) comprend au moins deux couches de corde (2a, 2b, 5a, 5b ; 5a, 5b) enroulées autour de ladite surface extérieure et une structure en spirale (4) enroulée entre deux desdites au moins deux couches de corde (2b, 5a ; 5a, 5b).

6. Actionnement à suspension épaisse selon une quelconque des revendications précédentes, dans lequel ledit système de surveillance comprend en outre au moins un capteur de pression (15) agencé pour mesurer la pression dans ladite structure de soutien (2a, 2b, 3, 4, 5b ; 5a, 4, 5b ; 5a, 5b) et un moyen de communication (20) couplée au dit capteur de pression pour fournir un signal représentatif d'une détection de pression dans ladite structure de soutien.

7. Actionnement à suspension épaisse selon la revendication 6, dans lequel ledit moyen de communication (20) pour fournir un signal représentatif d'une détection de pression dans ladite structure de soutien et le même moyen de communication que le moyen de communication fournissant un signal représentatif d'une détection d'humidité dans ladite structure de soutien (2a, 2b, 3, 4, 5b ; 5a, 4, 5b ; 5a, 5b).

8. Actionnement à suspension épaisse selon une quelconque des revendications précédentes, dans lequel ledit au moins un capteur d'humidité (9) est disposé en découpant à travers ladite couche de couverture extérieure (6) dudit actionnement à suspension épaisse vers le bas dans ladite structure de soutien (2a, 2b, 3, 4, 5b ; 5a, 4, 5b ; 5a, 5b) et en fournissant une cavité de capteur (10) à l'intérieur de laquelle ledit au moins un capteur d'humidité est positionné, dans lequel ladite cavité de capteur est isolée de manière étanche par rapport à l'extérieur de l'actionnement à suspension épaisse.

9. Actionnement à suspension épaisse selon une quelconque des revendications 6 - 8, dans lequel ledit au moins un capteur de pression (15) est disposé en découpant à travers ladite couche de couverture extérieure(6) dudit actionnement à suspension épaisse vers le bas dans ladite structure de soutien (2a, 2b, 3, 4, 5b ; 5a, 4, 5b ; 5a, 5b) et en fournissant une cavité de capteur (10) à l'intérieur de laquelle ledit au moins un capteur de pression est positionné, dans lequel ladite cavité de capteur est isolée de manière étanche par rapport à l'extérieur de l'actionnement à suspension épaisse.

10. Actionnement à suspension épaisse selon une quelconque des revendications précédentes, dans lequel ledit au moins un capteur d'humidité (9) est disposée à l'intérieur de ladite structure de soutien (2a, 2b, 3, 4, 5b ; 5a, 4, 5b ; 5a, 5b) pendant la fabrication dudit actionnement à suspension épaisse et ledit au moins un capteur d'humidité est un capteur sans fil.

11. Actionnement à suspension épaisse selon une quelconque des revendications 6 - 10, dans lequel ledit au moins un capteur de pression (15) est disposé à l'intérieur de ladite structure de soutien (2a, 2b, 3, 4, 5b ; 5a, 4, 5b ; 5a, 5b) pendant la fabrication dudit actionnement à suspension épaisse et ledit au moins un capteur de pression est un capteur sans fil.

12. Installation à suspension épaisse comprenant au moins un actionnement à suspension épaisse selon une quelconque des revendications précédentes, **caractérisé en ce que** ledit au moins un capteur d'humidité (9) et optionnellement au moins un capteur de pression (15) est/sont spécifiques au dispositif et fournissent des détections/alarmes séparées pour chaque actionnement à suspension épaisse séparé.

13. Procédé d'installation d'un système de surveillance pour détecter l'usure intérieure d'un actionnement à suspension épaisse, lequel actionnement à suspension épaisse transfère ou traite une matière solide dans un fluide et lequel actionnement à suspension épaisse a une section transversale englobante ; et comprend une couche d'usure intérieure (1) ayant une surface intérieure, adapté pour le contact avec une matière solide dans un fluide et une surface extérieure ; une structure de soutien (2a, 2b, 3, 4, 5b ; 5a, 4, 5b ; 5a, 5b) enroulée, tissée ou tressée autour de ladite surface extérieure ; et une couche de couverture extérieure (6) étant disposée sur ladite structure de soutien, **caractérisé par**
disposer au moins un capteur d'humidité (9) pour détecter l'humidité dans ladite structure de soutien ; et
coupler un moyen de communication (20) audit au moins un capteur d'humidité pour fournir un signal représentatif d'une détection d'humidité dans ladite structure de soutien.

14. Procédé selon la revendication 13, comprenant en outre de
disposer au moins un capteur de pression (15) pour mesurer la pression dans ladite structure de soutien (2a, 2b, 3, 4, 5b ; 5a, 4, 5b ; 5a, 5b) ; et
coupler un moyen de communication (20) audit au moins un capteur de pression pour fournir un signal représentatif d'une détection de pression dans ladite structure de soutien.

15. Procédé selon la revendication 13 ou 14, dans lequel ledit au moins un capteur d'humidité est agencé en
découpant à travers ladite couche de couverture extérieure (6) dudit actionnement à suspension épaisse vers le bas dans ladite structure de soutien (2a, 2b, 3, 4, 5b ; 5a, 4, 5b ; 5a, 5b) ;
fournissant au moins une cavité de capteur (10) ;
disposant ledit au moins un capteur d'humidité à l'intérieur de ladite au moins une cavité de capteur ; et
isolant de manière étanche ladite au moins une cavité de capteur par rapport à l'extérieur de l'actionnement à suspension épaisse.

16. Procédé selon la revendication 14 ou 15, dans lequel ledit au moins un capteur de pression (15) est agencé pour
découper à travers ladite couche de couverture extérieure (6) dudit actionnement à suspension épaisse vers le bas dans ladite structure de soutien (2a, 2b, 3, 4, 5b ; 5a, 4, 5b ; 5a, 5b) ;
fournir au moins une cavité de capteur (10) ;
disposer ledit au moins un capteur de pression (15) à l'intérieur de ladite au moins une cavité de capteur ; et
isoler de manière étanche ladite au moins une cavité de capteur par rapport à l'extérieur de l'actionnement à suspension épaisse.

17. Procédé selon une quelconque des revendications 13 - 16, dans lequel ledit au moins un capteur d'humidité (9) est disposé dans ladite structure de soutien (2a, 2b, 3, 4, 5b ; 5a, 4, 5b ; 5a, 5b) pendant la fabrication dudit actionnement à suspension épaisse et ledit au moins un capteur d'humidité est un capteur sans fil.

18. Procédé selon une quelconque des revendications 14 - 17, dans lequel ledit au moins un capteur de pression (15) est disposé dans ladite structure de soutien (2a, 2b, 3, 4, 5b ; 5a, 4, 5b ; 5a, 5b) pendant la fabrication dudit actionnement à suspension épaisse et ledit au moins un capteur de pression est un capteur sans fil.
